# EUROPÄISCHE PATENTANMELDUNG

(11) **EP 2 447 502 A2**
(43) Veröffentlichungstag der Anmeldung: **02.05.2012**
(21) Anmeldenummer: 11006798.0
(22) Anmeldetag: 22.08.2011
(51) Int. Cl.: F02C 3/22, F02C 6/14, F02C 6/18

(54) **Verfahren zum Betreiben eines Industriekraftwerks sowie Industriekraftwerk für Prozessgase**

(30) Priorität: 17.09.2010 DE 102010045622
(71) Anmelder: RWE Power Aktiengesellschaft, 45128 Essen (DE); RWE Technology GmbH, 45128 Essen (DE)
(72) Erfinder: Scheuer, Uwe, 45475 Mülheim (DE); Johann, Thomas, 47506 Neukirchen-Vluyn (DE)
(74) Vertreter: Polypatent

(57) **Zusammenfassung**

Die Erfindung betrifft ein Verfahren zum Betreiben eines Industriekraftwerks mit wenigstens einer Gasturbine, wobei die Gasturbine zumindest teilweise mit Prozessgas aus einem mit dem Kraftwerksprozess gekoppelten Prozess wie beispielsweise einem Hüttenprozess betrieben wird. Das Prozessgas wird zumindest teilweise über den Betriebsdruck der Gasturbine verdichtet und in einem Druckgasspeicher eingespeist sowie nach Entspannung auf Betriebsdruckniveau der Gasturbine dieser wieder aufgegeben.

## Beschreibung

Die Erfindung betrifft ein Verfahren zum Betrieben eines Industriekraftwerks sowie ein lndustriekraftwerk für Prozessgase.

Es ist grundsätzlich aus dem Stand der Technik bekannt, Prozessgase beispielsweise aus Hüttenprozessen, Schmelzereduktionseinrichtungen sowie sekundärmetallurgischen Prozessen sowohl thermisch als auch chemisch zu nutzen. Problematisch sind häufig schwankende Gaszusammensetzungen sowie ein niedriger Exportgasdruck. Ebenso problematisch ist die kontinuierliche Bereitstellung der Prozessgase.

Die zur Zeit operierenden Kraftwerke in der Prozess- und Hüttenindustrie basieren grundsätzlich auf dem Einsatz konventioneller, mit Prozessgas befeuerter Gaskesselanlagen. Der Einsatz von Gasturbinenanlagen war bisher oft nicht wirtschaftlich zu vertreten, da die Gasturbine ihren Brennstoff auf einem deutlich höheren Druckniveau benötigt, als ein konventioneller Gaskessel. Das Prozessgas steht in der Regel auf einem niedrigen Druckniveau zur Verfügung. Der beim Einsatz einer Gasturbine zwangsläufig notwenige Verdichtungsprozess benötigt einen signifikanten Anteil der erzeugten Leistung und reduziert damit den Wirkungsgrad.

Der Erfindung liegt daher die Aufgabe zugrunde, ein Verfahren zum Betreiben eines lndustriekraftwerks bereitzustellen, welches hinsichtlich der energetischen Nutzung des Prozessgases verbessert ist. Der Erfindung liegt weiterhin die Aufgabe zugrunde, ein entsprechend ausgebildetes Industriekraftwerk vorzuschlagen.

Die Aufgabe wird zunächst gelöst durch ein Verfahren zum Betreiben eines Industriekraftwerks mit wenigstens einer Gasturbine, wobei die Gasturbine zumindest teilweise mit Prozessgas aus einem mit dem Kraftwerksprozess gekoppelten Prozess wie beispielsweise einem Hüttenprozess betrieben wird, wobei das Prozessgas zumindest teilweise über den Betriebsdruck der Gasturbine verdichtet und in einen Druckgasspeicher eingespeist wird sowie nach Entspannung auf Betriebsdruck der Gasturbine dieser als Brenngas aufgegeben wird.

Das Verfahren gemäß der Erfindung sieht vor, das Prozessgas vorzugsweise mehrstufig so hoch zu verdichten, dass das in den Druckgasspeicher eingespeiste Prozessgas auf einem Druckniveau gespeichert wird, welches signifikant über dem Betriebsdruck der Gasturbine liegt. Daraus ergeben sich mehrere Vorzüge. Einerseits wird durch die Speicherung des Prozessgases unter verhältnismäßig hohem Druck eine Entkopplung des Gaserzeugungsprozesses und des Verbrauchsprozesses erzielt. Andererseits wird in vorteilhafter Art und Weise die für die Brenngasverdichtung benötigte Energie teilweise zurückgenommen. Aufgrund dessen können Angebots/Nachfrageschwankungen ausgeglichen werden.

Durch die Entspannung des aus dem Druckgasspeicher entnommenen Prozessgases ist eine zusätzliche Energieerzeugung möglich.

Beispielsweise kann die bei der Entspannung des Brenngases entstehende Temperatursenke zur Ansaugluftkühlung der Gasturbine genutzt werden. Über die Kühlung der beispielsweise in den Sommermonaten wärmeren Ansaugluft für die Gasturbine lässt sich eine zusätzliche Leistungssteigerung der Gasturbine erzielen. Je nach Prozessgasanfall kann beispielsweise nur eine Teilmenge des Prozessgases in den Druckgasspeicher eingespeist werden, eine weitere Teilmenge des Prozessgases kann unmittelbar nach Verdichtung der Gasturbine als Brenngas aufgegeben werden.

Bei einer besonders bevorzugten Variante des Verfahrens gemäß der Erfindung ist vorgesehen, dass das aus dem Druckgasspeicher entnommene Prozessgas mittels wenigstens einer Entspannungsturbine unter Umsetzung der mechanischen Arbeit in elektrische Energie entspannt wird. Die Nutzung der Energie des verdichteten Prozessgases bei der Entspannung kann so unabhängig von den Betriebszeiten der Gasturbine genutzt werden. So ist es beispielsweise auch möglich, dass eine Teilmenge des aus dem Druckgasspeicher entnommenen Prozessgases dem gekoppelten Industrieprozess zwecks thermischer Verwertung wieder zugeführt wird. Dabei kann die bei der Entspannung anfallende Energie ebenfalls sowohl elektrisch als auch thermisch genutzt werden, beispielsweise zur Ansaugluftkühlung der Gasturbine.

Die Aufgabe wird weiterhin gelöst durch ein Industriekraftwerk für Prozessgase mit wenigstens einer Gasturbine, der wenigstens ein Brenngasverdichter in einer Brenngaszufuhrleitung vorgeschaltet ist, wobei der Brenngaszufuhrleitung ein Druckgasspeicher parallel geschaltet ist.

Bei einer bevorzugten Variante des Kraftwerks gemäß der Erfindung ist vorgesehen, dass der Druckgasspeicher als Speicherleitung (Optimierungsleitung) ausgebildet ist.

Der Druckgasspeicher kann beispielsweise wenigstens einen Brenngasnachverdichter und wenigstens eine Expansionsturbine umfassen.

Die Gasturbine ist zweckmäßigerweise mit einer Ansaugluftkühlung versehen.

Die Ansaugluftkühlung kann mit wenigstens einer Einrichtung zur Entspannung von Brenngas thermisch gekoppelt sein.

Zweckmäßigerweise ist die Brenngaszufuhrleitung an ein Hüttengasnetz angeschlossen.

Das erfindungsgemäß Verfahren sowie das erfindungsgemäße Industriekraftwerk ermöglichen eine effektive Energiespeicherung in Form von erhöhtem Gasdruck in dem Druckgasspeicher in Zeiten niedriger elektrischer Energiepreise. Eine zusätzlich Energiebereitstellung erfolgt durch Gasexpansion in Zeiten hoher elektrischer Energiepreise. Darüber hinaus wird das diskontinuierliche Prozessgasangebot für weitere Prozesse vergleichmäßigt. Das Kraftwerk selbst läst sich bei optimalen Wirkungsgraden betreiben. Schließlich ist diese inselnetzfähig und lässt sich bei Netzausfall ohne weiteres starten (Schwarzstartfähigkeit).

Die Erfindung wird nachstehend unter Bezugnahme auf das beigefügte Verfahrensschema, beispielsweise für einen Hüttenprozess mit Hüttengasproduktion, erläutert.

In dem beigefügten Verfahrensschema ist mit 1 ein Hüttenprozess mit Hüttengasproduktion bezeichnet. Der Hüttenprozess 1, eine konventionell mit Prozessgas befeuerte Gaskesselanlage 2 sowie eine Stahlverarbeitungseinrichtung 3 sind über ein Hüttengasnetz 4 miteinander verbunden. Das Hüttengas aus dem Hüttengasnetz 4 wird mit einem Druck von etwa 1 bar bereitgestellt. An dieses ist weiterhin unter Zwischenschaltung eines mehrstufigen Brenngasverdichters 5 mit Zwischenkühlung eine Gasturbine 6 mit einem nachgeschalteten Abhitzedampferzeuger 7 angeschlossen. Die Gasturbine 6 wird über eine Brenngaszufuhrleitung 8 unter Zwischenschaltung einer Mischeinrichtung 9 mit Prozessgas gespeist. Parallel zu der Brenngaszufuhrleitung 8 ist eine Brenngasspeicherleitung 10 geschaltet, welcher ein Brenngasnachverdichter 11 vorgeschaltet und eine Expansionsturbine 12 nachgeschaltet ist. Die Expansionsturbine 12 ist thermisch über einen Wärmetauscherkreislauf 13 mit einer Ansaugluftkühlung 14 der Gasturbine 6 gekoppelt. Der Brenngasverdichter 5 und der Brenngasnachverdichter 11 sind thermisch über einen weiteren Wärmetauscherkreislauf 15 mit einer Brenngasvorwärmung 16 gekoppelt.

In der Brenngaszufuhrleitung 8 ist eine Leitungsverzweigung zu einer Brenngasreduzierstation 17 vorgesehen, über welcher Brenngas/Prozessgas wieder in das Hüttengasnetz 4 zurückgespeist werden kann.

Über den Abhitzedampferzeuger 7 wird eine Dampfturbine 18 betrieben, die wiederum einen Generator antreibt. Ebenso wie auch die Gasturbine 6 einen Generator treibt, kann die mit 12 bezeichnete Expansionsturbine einen nicht dargestellten Generator treiben.

Das aus dem Hüttengasnetz 4 bezogene Brenngas wird zunächst in dem mehrstufigen Brenngasverdichter 5 von 1 bar auf ca. 30 bar verdichtet. Dies kann je nach Fahrweise über den Brenngasnachverdichter 11 mit einem Druck von etwa 90 bar in die Brenngasspeicherleitung 10 eingespeist werden oder auch direkt über die Brenngasvorwärmung 16 der Gasturbine 6 aufgegeben werden. Je nach Bedarf kann der Brenngasspeicherleitung 10 über die Expansionsturbine 12 Prozessgas/Brenngas entnommen werden, und zwar unter Entspannung auf einem Druck von etwa 30 bar. Dabei wird in der Expansionsturbine 12 verrichtete Arbeit in elektrische Energie umgesetzt. Weiterhin wird die thermische Energie über den Wärmetauscherkreislauf 13 in die Ansaugluft (Ansaugluftkühler 14) der Gasturbine 6 eingekoppelt. Im folgenden wird das Brenngas in der Brenngasvorwärmung 16 erwärmt, und zwar unter Einkopplung von thermischer Energie aus dem Brenngasverdichter 5 und aus dem Brenngasnachverdichter 11 1 (Wärmetauscherkreislauf 15). Das erwärmte Brenngas/Prozessgas wird in der Gasturbine 6 entspannt. Diese treibt einen Generator. Die Abhitze aus der Gasturbine wird in dem Abhitzedampferzeuger 7 (Abhitzekessel) zum Betreiben der Dampfturbine 18 genutzt. Gegebenenfalls kann eine weitere Dampfauskopplung für weitere Dampfturbinen vorgesehen sein.

Je nach Menge des anfallenden Hüttengases/Prozessgases und je nach Bedarf an Hüttengas in der dem Hüttenprozess nachgeschalteten Stahlverarbeitungseinrichtung 3 kann es erforderlich sein, Prozessgas/Hüttengas aus der Brenngasspeicherleitung 10 wieder in das Hüttengasnetz 4 zurückzuführen. Dies erfolgt dann über die Brenngasreduzierstation 17, die thermisch ebenfalls mit der Luftansaugkühlung 14 gekoppelt ist.

### Bezugszeichenliste

- 1: Hüttenprozess
- 2: Gaskesselanlage
- 3: Stahlverarbeitungseinrichtung
- 4: Hüttengasnetz
- 5: Brenngasverdichter
- 6: Gasturbine
- 7: Abhitzedampferzeuger
- 8: Brenngaszufuhrleitung
- 9: Mischeinrichtung
- 10: Brenngasspeicherleitung
- 11 1: Brenngasnachverdichter
- 12: Expansionsturbine
- 13: Wärmetauscherkreislauf
- 14: Ansaugluftkühler
- 15: Wärmetauscherkreislauf
- 16: Brenngasvorwärmung
- 17: Brenngasreduzierstation
- 18: Dampfturbine

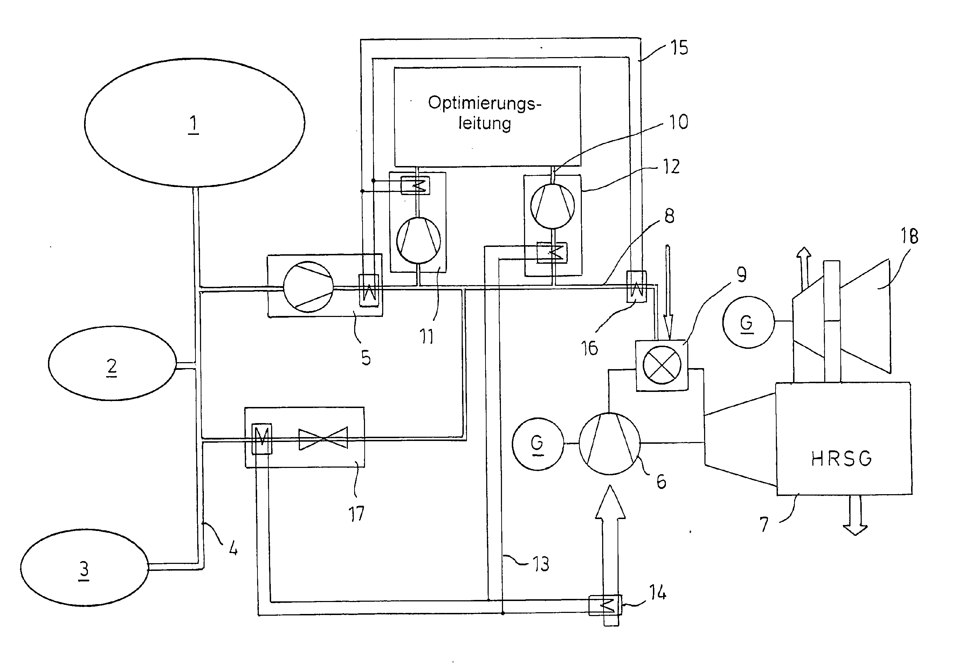

## Patentansprüche

1. Verfahren zum Betreiben eines Industriekraftwerks mit wenigstens einer Gasturbine, wobei die Gasturbine zumindest teilweise mit Prozessgas aus einem mit dem Kraftwerksprozess gekoppelten Prozess wie beispielsweise einem Hüttenprozess betrieben wird, wobei das Prozessgas zumindest teilweise über den Betriebsdruck der Gasturbine verdichtet und in einen Druckgasspeicher eingespeist wird sowie nach Entspannung auf Betriebsdruckniveau der Gasturbine dieser als Brenngas aufgegeben wird.

2. Verfahren nach Anspruch 1, **dadurch gekennzeichnet, dass** die bei der Entspannung des Brenngases entstehende Temperatursenke zur Ansaugluftkühlung der Gasturbine genutzt wird.

3. Verfahren nach einem der Ansprüche 1 oder 2, **dadurch gekennzeichnet, dass** eine Teilmenge des Prozessgases unmittelbar nach Verdichtung der Gasturbine als Brenngas aufgegeben wird.

4. Verfahren nach einem der Ansprüche 1 bis 3, **dadurch gekennzeichnet, dass** das aus dem Druckgasspeicher entnommene Prozessgas mittels wenigstens einer Expansionsturbine unter Umsetzung der mechanischen Arbeit in elektrische Energie entspannt wird.

5. Verfahren nach einem der Ansprüche 1 bis 4, **dadurch gekennzeichnet, dass** wenigstens eine Teilmenge des aus dem Druckgasspeicher entnommenen Prozessgases nach Entspannung dem gekoppelten Prozess zwecks thermischer Verwertung wieder zugeführt wird.

6. Verfahren nach Anspruch 5, **dadurch gekennzeichnet, dass** die bei der Entspannung entstehende Temperatursenke zur Ansaugluftkühlung der Gasturbine genutzt wird.

7. lndustriekraftwerk für Prozessgase mit wenigstens einer Gasturbine (6), der wenigstens ein Brenngasverdichter (5) in einer Brenngaszufuhrleitung (8) vorgeschaltet ist, wobei der Brenngaszufuhrleitung (8) ein Druckgasspeicher (10) parallel geschaltet ist.

8. Kraftwerk nach Anspruch 7, **dadurch gekennzeichnet, dass** der Druckgasspeicher als Speicherleitung ausgebildet ist.

9. Kraftwerk nach einem der Ansprüche 7 oder 8, **dadurch gekennzeichnet, dass** der Druckgasspeicher wenigstens einen Brenngasverdichter (5) und wenigstens eine Expansionsturbine (12) umfasst.

10. Kraftwerk nach einem der Ansprüche 7 bis 9, **dadurch gekennzeichnet, dass** die Gasturbine (6) eine Ansaugluftkühlung (14) aufweist.

11. Kraftwerk nach Anspruch 10 **dadurch gekennzeichnet, dass** die Ansaugluftkühlung (11) mit wenigstens einer Einrichtung zur Entspannung von Brenngas thermisch gekoppelt ist.

12. Kraftwerk nach einem der Ansprüche 7 bis 11 **dadurch gekennzeichnet, dass** die Brenngaszufuhrleitung (8) an ein Hüttengasnetz angeschlossen ist.
